**Europäisches Patentamt**

(19) **European Patent Office**

**Office européen des brevets**

(11) Numéro de publication: **0 120 771**
**A2**

# (12) DEMANDE DE BREVET EUROPEEN

(21) Numéro de dépôt: **84400550.4**

(22) Date de dépôt: **19.03.84**

(51) Int. Cl.³: **G 06 F 1/00**

(30) Priorité: **18.03.83 FR 8304803**

(43) Date de publication de la demande:
**03.10.84 Bulletin 84/40**

(84) Etats contractants désignés:
**AT BE CH DE GB IT LI LU NL SE**

(71) Demandeur: **COMPAGNIE INDUSTRIELLE DES TECHNIQUES POUR L'INFORMATIQUE, CITI, SA.**
**41, Rue Monserby**
**F-31500 Toulouse(FR)**

(72) Inventeur: **Courties, Jean**
**71, Chemin Lafilaire**
**F-31500 Toulouse(FR)**

(72) Inventeur: **Delpy, Patrick**
**71, Rue des Fontaines**
**F-31300 Toulouse(FR)**

(72) Inventeur: **Sanz, Paul**
**39, Rue Riquet**
**F-31000 Toulouse(FR)**

(72) Inventeur: **Cousteaux, Jean-Paul**
**1, Rue Hoche**
**F-31200 Toulouse(FR)**

(74) Mandataire: **Morelle, Guy Georges Alain**
**Cabinet SCOPI 1, Avenue de Rangueil**
**F-31400 Toulouse(FR)**

(54) Installation d'un ordinateur dans des endroits publics.

(57) La présente invention concerne une installation d'un ordinateur.

Cette installation est remarquable par le fait que les terminaux de susdit ordinateur sont disposés dans des cabines 1 situées à des endroits publics et sont associés à au moins un dispositif d'identification 6 ou 7 qui, déclenché par la validation d'un élément autorisé se présentant sous la forme d'une pièce de monnaie, d'un jeton ou d'une carte magnétique, et introduit dans ledit dispositif par l'utilisateur du terminal, assure un fonctionnement temporisé du terminal y associé.

Cette cabine 1 est divisée en deux compartiments la et 1b par une paroi verticale 2 dont la face avant 2a comportant l'écran 3 et le pupitre 4 du terminal et les orifices d'entrée 5a, 5b et 5c des dispositifs 6 et 7, délimite le compartiment la dont la porte d'accès l'a est libre pour les utilisateurs du terminal et dont la face arrière 2b comportant les composants nécessaires au fonctionnement des organes de la face avant la, délimite le compartiment 1b dont la porte 1'b n'est réservée qu'au réparateur de l'ensemble de l'installation.

Croydon Printing Company Ltd

# INSTALLATION D'UN ORDINATEUR DANS DES ENDROITS PUBLICS

La présente invention a trait à un ordinateur et plus précisément à l'utilisation particulière qui peut être faite d'un ordinateur de conception classique du type de celui constitué d'une unité centrale de traitement autour de laquelle sont connectées des unités périphériques appelées "terminaux". Ces terminaux se présentent généralement sous la forme d'un écran combiné à un pupitre de commande.

Suivant l'invention, la demanderesse a imaginé une installation d'un ordinateur remarquable en ce que les terminaux sont disposés dans des endroits publics et sont associés à au moins un dispositif d'identification qui, déclenché par la validation d'un élément autorisé, introduit dans ledit dispositif par l'utilisateur du terminal, assure un fonctionnement temporisé de ce dernier. Le but recherché par la demanderesse lors de la mise en place de ces ordinateurs a été de permettre au public de pouvoir accéder à des informations emmagasinées dans les unités centrales, ceci quels que soient l'endroit (selon les points d'installation des terminaux) et le moment.

Ainsi, lorsqu'une personne veut avoir accès à des informations stockées dans une unité centrale de traitement, il lui suffit d'introduire un élément autorisé qui, selon l'invention, peut se présenter sous la forme d'une pièce de monnaie, d'un jeton ou d'une carte magnétique, dans un des dispositifs d'identification associés à un terminal pour que ce dernier soit mis en fonctionnement pendant une durée prédéterminée.

Selon une caractéristique particulièrement avantageuse de l'invention, d'une part l'écran des terminaux est protégé par une vitre incassable, et d'autre part le pupitre de commande est pourvu d'une porte d'accès dont l'ouverture est assujettie au déclenchement d'un des dispositifs d'identification.

Cette caractéristique offre le grand avantage de protéger les organes essentiels des terminaux contre les actes de vandalisme qui se produisent fréquemment sur les appareils disposés dans des endroits publics.

Le fonctionnement des terminaux d'une installation d'un ordinateur selon l'invention est simple. L'utilisateur pénètre dans un endroit public où est installé un terminal et introduit une pièce de monnaie, un jeton ou une carte magnétique dans l'orifice d'entrée d'un des trois dispositifs d'identification associés à ce terminal. Ce dispositif, qui peut être soit un sélecteur de pièces ou de jetons, soit un lecteur magnétique, identifie l'élément introduit dans son orifice d'entrée et déclenche simultanément, si celui-ci est autorisé, l'ouverture de la porte d'accès du pupitre de commande, la mise en liaison du terminal avec l'unité centrale de traitement et la mise en service de l'écran.

Par l'intermédiaire d'un logiciel conversationnel question-réponse auquel l'utilisateur a accès en manipulant les touches du clavier de pupitre de commande, une communication est ainsi établie entre l'utilisateur et l'unité centrale de traitement.

Cette dernière est équipée d'un temporisateur qui commande simultanément, après la durée prédéterminée autorisée de la communication, la fermeture de la porte d'accès du susdit pupitre de commande, l'interruption de la liaison du terminal avec l'unité centrale et l'arrêt du susdit écran.

Selon une autre caractéristique préférentielle de l'invention, le susdit terminal et le ou les susdits dispositifs d'identitifation y associés sont intégrés dans une cabine divisée en deux compartiments par une paroi verticale. L'une des deux faces, dite face avant de cette paroi, comportant l'écran et le pupitre de commande du terminal et les orifices d'entrée des susdits dispositifs d'identification, définit un compartiment dont la porte d'accès est libre pour les utilisateurs du terminal, alors que l'autre face, dite face arrière, comportant les composants nécessaires au fonctionnement des organes de la face avant, définit un compartiment dont la porte d'accès n'est réservée qu'au personnel d'entretien de l'ensemble de l'installation. Cette cabine a pour objet de constituer un abri pour les personnes utilisant l'installation de l'invention lorsque cette dernière est située dans un endroit public extérieur. Les dispositions particulières de cette cabine ont également pour objectif de protéger l'installation contre les risques de vandalisme.

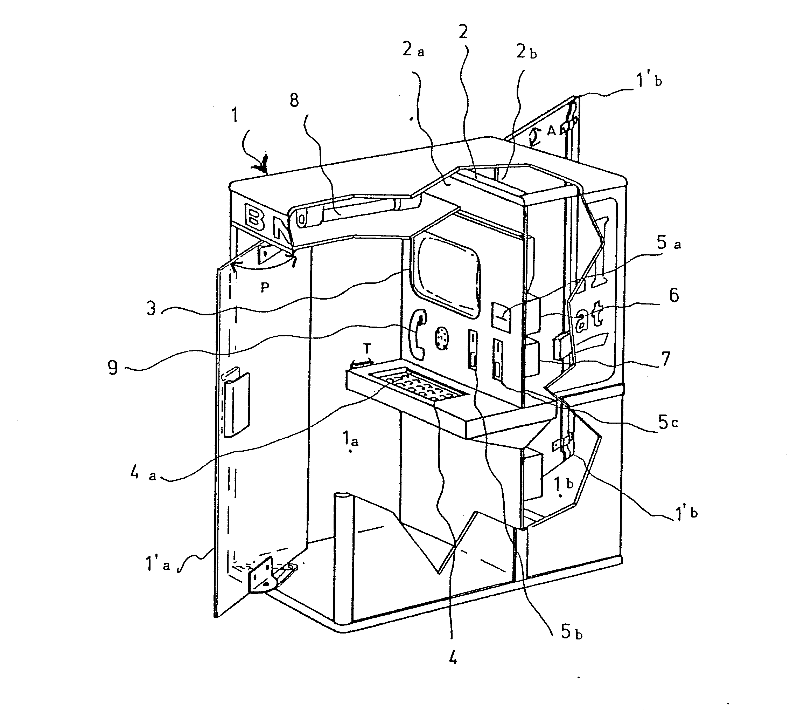

Bien que les aspects généraux de l'invention considérés comme nouveaux soient exprimés ci-dessus, de plus amples détails concernant une méthode préférée et d'autres caractéristiques de celle-ci, seront mieux compris en se référant à la description détaillée ci-dessous et au dessin l'accompagnant.

La figure portée par ce dessin est une vue en perspective partiellement écorchée d'une cabine comportant une installation selon l'invention.

Cette cabine référencée 1 dans son ensemble est divisée en deux compartiments, 1a et 1b, par une paroi verticale 2. La face avant 2a de cette paroi verticale, délimitant l'enceinte du compartiment 1a, est équipée d'un écran 3 et d'un pupitre de commande constitué par un clavier à touches 4, définissant les organes essentiels d'un terminal d'ordinateur de conception classique. On notera également sur cette face avant 2a, la présence de trois encoches 5a, 5b et 5c, associées chacune à un dispositif d'identification qui peut être soit un lecteur magnétique 6 si l'encoche 5a est destinée à l'entrée d'une carte magnétique soit des sélecteurs 7 (un seul est représenté) si les encoches 5b et 5c sont destinées à l'entrée de pièces de monnaie ou de jetons.

Les dispositifs d'identification 6 et 7 ainsi que les composants nécessaires au fonctionnement de l'écran 3 et du pupitre de commande 4 sont installés sur la face arrière 2b de la paroi verticale 2 délimitant l'enceinte du compartiment 1b.

Suivant l'invention, le compartiment 1a est équipé d'une porte d'accès 1'a montée librement pivotante autour de son axe central (flèche à double sens P) pour autoriser, à toute personne le souhaitant, le libre accès à l'intérieur du compartiment 1a, alors que le compartiment 1b est équipé d'une porte articulée 1'b (flèche à double sens A), qui est pourvue d'un dispositif de fermeture dont la combinaison n'est disponible qu'au personnel d'entretien de l'ensemble de l'installation. A cet effet, il est utile de préciser que, selon une caractérique préférentielle de l'invention, l'ensemble – écran 3, pupitre de commande 4 – constituant le terminal est monté sur un chariot coulissant le long de rails installés dans le compartiment 1b afin de rendre plus aisées les opérations de réparation ou de remplacement de ces organes.

Le fonctionnement de cette installation, qui a été décrit au début du présent mémoire, ne sera pas rappelé ci-après. Cependant, il est utile de préciser différents points de détails quant à la réalisation de certains éléments de cette installation.

Ainsi, par exemple, le clavier du pupitre de commande 4 est recouvert d'une plaque escamotable 4a, animée d'un mouvement de translation (flèche à double sens T) au moyen d'un moteur non représenté et disposé derrière la paroi verticale 2 dans le compartiment 1b. Cette plaque escamotable 4a constitue selon l'invention la porte d'accès au susdit pupitre de commande 4 dont l'ouverture (flèche T) est assujettie au déclenchement d'un des dispositifs d'identification 6 et 7.

De même, selon une caractéristique avantageuse de l'invention, le clavier du pupitre de commande 4 est recouvert d'une grille, non représentée, destinée à bloquer l'utilisation de touches non-fonctionnelles. Cette caractéristique a notamment pour intérêt d'autoriser l'insertion d'un clavier classique et de réduire ainsi le prix de revient de l'installation ainsi que de renforcer la protection dudit clavier.

Il est également possible d'améliorer l'esthétique d'ensemble de la cabine 1 en installant un éclairage 8 dans le compartiment 1a, ou encore en utilisant les parois du compartiment 1b comme supports publicitaires. Il est possible également d'ajouter, dans le compartiment 1a ou à l'extérieur de celui-ci, des postes fonctionnels, tel par exemple un poste téléphonique 9.

On comprendra que les réalisations et pratiques spécifiques décrites dans le présent mémoire ne l'ont été qu'en vue d'une divulgation, plutôt que d'une limitation, et que de nombreuses modifications, combinaisons et substitutions peuvent être effectuées par les hommes de l'Art sans s'éloigner ni de l'esprit ni de la portée de l'invention dans ses aspects les plus larges.

REVENDICATIONS                               **0120771**

1 - Installation d'un ordinateur constitué d'une unité centrale de traitement autour de laquelle sont connectées des unités périphériques appelées "terminaux" et comportant un écran et un pupitre de commande, CARACTERISEE PAR LE FAIT QUE les susdits terminaux sont disposés dans des endroits publics et sont associés à au moins un dispositif d'identification qui, déclenché par la validation d'un élément autorisé introduit dans ledit dispositif par l'utilisateur du terminal, assure un fonctionnement temporisé du terminal y associé.

2 - Installation d'un ordinateur selon la revendication 1, CARACTERISEE PAR LE FAIT QUE, d'une part, le susdit écran est protégé par une vitre incassable et que, d'autre part, le susdit pupitre de commande est pourvu d'une porte d'accès dont l'ouverture est assujettie au déclenchement du susdit dispositif d'identification.

3 - Installation d'un ordinateur selon les revendications 1 et 2, CARACTERISEE PAR LE FAIT QUE l'ouverture de la porte d'accès du susdit pupitre de commande, la mise en liaison du terminal avec l'unité centrale de traitement et la mise en service du susdit écran, sont assujetties simultanément au déclenchement du susdit dispositif d'identification.

4 - Installation d'un ordinateur selon les revendications 1, 2 et 3, CARACTERISEE PAR LE FAIT QUE la fermeture de la porte d'accès du susdit pupitre de commande, l'interruption de la liaison du terminal avec l'unité centrale de traitement et l'arrêt du susdit écran sont, après temporisation, commandés simultanément par la susdite unité centrale.

5 - Installation d'un ordinateur selon l'une quelconque des revendications 1, 2, 3 et 4, CARACTERISEE PAR LE FAIT QUE le susdit dispositif d'identification est constitué par un sélecteur de pièces de monnaie.

6 - Installation d'un ordinateur selon l'une quelconque des revendications 1-5, CARACTERISEE PAR LE FAIT QUE le susdit dispositif d'identification est constitué par un sélecteur de jetons.

7 - Installation d'un ordinateur selon l'une quelconque des revendications 1-6, CARACTERISEE PAR LE FAIT QUE le susdit dispositif d'identification est constitué par une tête de lecture de cartes.

8 - Installation d'un ordinateur selon la revendication 2, CARACTERISEE PAR LE FAIT QUE la susdite porte d'accès du pupitre de commande est constituée par une plaque escamotable recouvrant le clavier dudit pupitre.

9 - Installation d'un ordinateur selon les revendications 1, 2 et 8, CARACTERISEE PAR LE FAIT QUE le clavier du susdit pupitre de commande est recouvert d'une grille destinée à bloquer l'utilisation de touches non fonctionnelles.

10 - Installation d'un ordinateur selon les revendications 1-9 prises ensemble, CARACTERISEE PAR LE FAIT QUE le susdit terminal et le ou les sudits dispositifs d'identification y associés, sont intégrés dans une cabine divisée en deux compartiments par une paroi verticale : l'une des deux faces, dite face avant de cette paroi, comportant l'écran et le pupitre de commande du terminal et les orifices d'entrée des susdits dispositifs d'identification, définit un compartiment dont la porte d'accès est libre pour les utilisateurs du terminal, et l'autre face, dite face arrière, comportant les composants nécessaires au fonctionnement des organes de la face avant, définit un compartiment dont la porte d'accès n'est réservée qu'aux réparateurs de l'ensemble de l'installation.

11 - Installation d'un ordinateur selon la revendication 10, CARACTERISEE PAR LE FAIT QUE l'écran et le pupitre de commande du terminal sont montés sur un chariot coulissant le long des rails installés dans le compartiment délimité par la face arrière de la susdite paroi verticale.